# EUROPEAN PATENT APPLICATION

(11) **EP 1 102 449 A2**
(43) Date of publication of application: **23.05.2001**
(21) Application number: 00121392.5
(22) Date of filing: 12.10.2000
(51) Int. Cl.: H04L 29/06, G06F 11/16

(54) **Network data recovery system and method**

(30) Priority: 12.10.1999 KR 9944098
(71) Applicant: Finaldata Inc., Seoul (KR)
(72) Inventor: Lee, Chae-Hong, Kangnam-ku, Seoul (KR)
(74) Representative: Modiano, Guido, Dr.-Ing.

(57) **Abstract**

Disclosed is a data recovery system and method. A network data recovery method comprises the steps of: coupling the server and the client via a TCP/IP protocol through the network; the server detecting the corresponding data information from a first HDD of the client and transmitting the data information to the client when a data request is provided to the server by the client via the network; and the client receiving the detected data information from the server and storing data information in a storage device, recovering the damaged data by using stored information, and storing recovered data in a second HDD different from the damaged drive. A network data recovery system comprises a client connecting to a network, inputting a TCP/IP address and a password, reading information for recovering damaged data through the network or by using a sector reading function, recovering the data, and storing recovered data in an undamaged storage device; and a server checking the password when there is a connection request provided by the client on the network, allowing the connection when the password is found to be acceptable, analyzing the request data, and transmitting a response to the client when there is a data request provided by the client through the allowed path.

## Description

### BACKGROUND OF THE INVENTION

### (a) Field of the Invention

The present invention relates to a network data recovery system and method. More particularly, the present invention relates to a network data recovery system and method in which damaged files in a server hard disk are remotely controlled from a client's end to restore the files to their original condition.

### (b) Description of the Related Art

In general, a hard disk driver stores data on a magnetic disk and is widely used as a storage device of a computer system because of its high storage capacity. Recently, as personal computers have been greatly disseminated, the use of hard disks has also increased.

Hard disks can be easily damaged or lose data because of physical or electrical shocks, mistakes by the users, overuse, or violations between programs.

With the increasing use of personal computers, nowadays tasks require much more manipulation of computers, and the dependence on computers has increased so that many data files are stored on personal computers, and users now perform their work using the stored data files.

However, as the weight of work linked to computers increases, the incurred damage becomes greater when users mistakenly delete stored files, or even entire directories, which store work related files.

Also, when a user executes a vaccine program to remove computer viruses in a storage device, such as a floppy disk, that is put into a personal computer, the computer receives some degree of protection from being infected with computer viruses. However, recent computer viruses frequently infect the computers via the Internet, and when this occurs, the data stored in the computer, or even the computer system, itself cannot be used because of the computer viruses.

Various methods for recovering damaged data back to the original files have been provided, but there is no method and system for recovering the data by remote control via the Internet.

### SUMMARY OF THE INVENTION

The present invention has been made in an effort to solve the above problems.

It is an object of the present invention to provide a network data recovery system and method in which a user executes a server program even when data stored in his or her hard disk is damaged then connects with the server using a network protocol from the client's side, after which a data region of the hard disk is searched then transmitted to the client such that damaged data is recovered even when the entire file system is damaged.

In one aspect of the present invention, in a method for recovering data through a server that includes a hard disk including damaged data, a network, and a client coupled to the server via the network, a network data recovery method comprises the steps of: (a) coupling the server and the client via a transmission control protocol/Internet protocol (TCP/IP) protocol through the network; (b) the server detecting the corresponding data information from a first hard disk drive (HDD) of the client and transmitting the data information to the client when a data request is provided to the server by the client via the network; and (c) the client receiving the detected data information from the server and storing data information in a storage device, recovering the damaged data by using stored information, and storing recovered data in a second HDD different from the damaged drive.

The step (b) comprises steps of: (b-1) checking an acceptability of a password provided through the network, and when the password is determined to be not acceptable, terminating an access to the client; (b-2) checking, when the password is determined to be acceptable, whether a data request is provided from the client, waiting until the data request is generated when there is no data request provided by the client, and checking, when there is a data request provided by the client, whether a disk information request is provided by the client; (b-3) transmitting disk information to the client when there is a disk information request provided by the client, and checking whether a disk sector data request is provided by the client when there is no disk information request provided by the client; and (b-4) reading sectors from the disk and transmitting the sectors to the client when there is a disk sector data request provided by the client, checking whether there is a connection termination request provided when there is no disk sector data request provided by the client, terminating the connection when there is a connection termination request provided, and returning to step (b-2) when there is no connection termination request provided.

The step (c) comprises steps of: (c-1) reading partition information of the damaged first HDD from the server, and storing partition information in the storage device; (c-2) detecting boot sector values from the partition information; (c-3) analyzing disk information from the boot sector information, and checking whether the disk information is a file allocation table (FAT); (c-4) determining that the damaged hard disk is a FAT file system, and recovering the FAT file system when the disk information is a FAT in step (c-3); (c-5) analyzing disk information from the boot sector information, and checking whether the disk information is an NT file system (NTFS); (c-6) determining that the damaged hard disk is a NTFS file system when the disk information is an NTFS in step (c-5), and recovering the NTFS file system; and (c-7) analyzing disk information from the boot sector information, and checking whether the disk information is a UNIX file system (UFS); (c-8) determining that the damaged hard disk is a UFS file system when the disk information is a UFS in step (c-7), and recovering the UNIX file system; and (c-9) determining that the damaged hard disk is an unknown file system when the disk information is not a UNIX file system in step (c-7), and recovering the unknown file system.

In another aspect of the present invention, a network data recovery system comprises a client connecting to a network, inputting a transmission control protocol/Internet protocol (TCP/IP) address and a password, reading information for recovering damaged data through the network or by using a sector reading function, recovering the data, and storing recovered data in an undamaged storage device; and a server checking the password when there is a connection request provided by the client on the network, allowing the connection when the password is found to be acceptable, analyzing the request data, and transmitting a response to the client when there is a data request provided by the client through the allowed path.

When a password log-in is provided by the client, the server monitors whether a TCP/IP protocol connection request is provided by the client, and when there is a connection request provided, the server checks an acceptability of the password, and when the password is found to be acceptable, the server checks whether there is a data request provided by the client, and when the requested data is disk information, the server reads disk information from the damaged hard disk and transmits the disk information to the client, and when the requested data is sector information, the server reads the sector information from the damaged hard disk and transmits the sector information to the client, and when the requested data is connection termination information, the server terminates a connection to the network.

The sector information comprises information on a partition table, boot sector, FAT, root directory, and data.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 is a schematic diagram of a network data recovery system according to a preferred embodiment of the present invention;
FIG. 2 is a flow chart of operations performed by a client to initiate a network data recovery method according to a preferred embodiment of the present invention;
FIG. 3 is a flow chart of operations performed by a server to initiate a network data recovery method according to a preferred embodiment of the present invention;
FIG. 4 is a more detailed flow chart of the operations of FIG. 2; and
FIG. 5 is a flow chart of a network data recovery method for a FAT file system according to a preferred embodiment of the present invention.

### DETAILED DESCRIPTION OF THE PREFERRED EMBODIMENTS

Preferred embodiments of the present invention will now be described in detail with reference to the accompanying drawings.

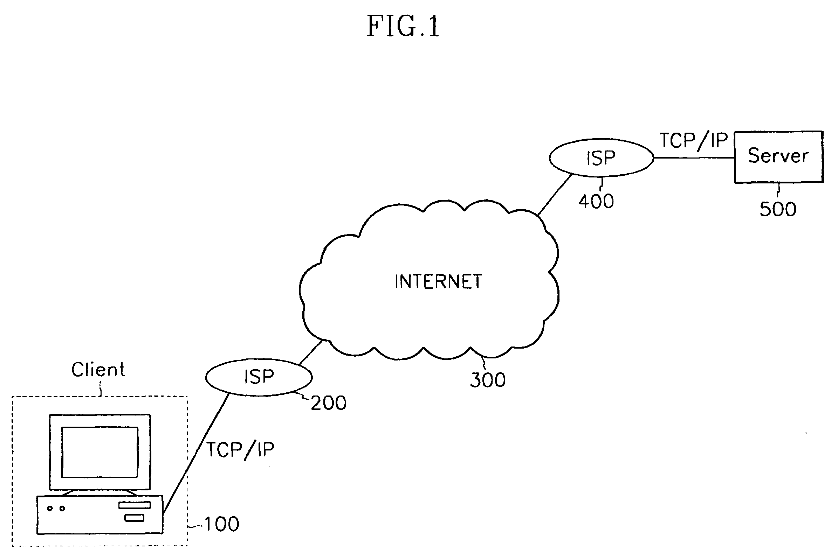

FIG. 1 is a schematic diagram of a remote control data recovering system according to an embodiment of the present invention.

As shown in FIG. 1, the remote control data recovering system comprises a client 100 which provides a data recovering program; a client Internet service provider (ISP) 200; an Internet 300; a server ISP 400; and a server 500 which installs a hard disk having damaged data.

When the server 500 receives a connection request from the client 100 via the Internet 300, the server 500 checks its password, and when the password is found to be acceptable, the server 500 provides permission for connection, and when the server 500 receives a data request from the client 100 via the permitted path, the server 500 analyzes the requested data and transmits the corresponding information to the client 100.

In detail, when the server 500 receives a password login message from the client 100, the server 500 monitors whether or not a TCP/IP protocol connection request has been provided from the client 100, and when the request is provided, the server 500 checks the password to determine if it is acceptable, and when the password is found to be acceptable, the server 500 checks whether a data request has been provided from the client 100.

When the requested data is for disk information, the server 500 reads the disk information from the damaged hard disk and transmits the disk information to the client 100, and when the requested data is for sector information, the server reads the sector information from the damaged hard disk and transmits the sector to the client 100, and when the requested data is for connection termination information, the server 500 disconnects the connected state and terminates the connection to the network.

A data recovering method using the remote control data recovering system according to the preferred embodiment of the present invention will now be described.

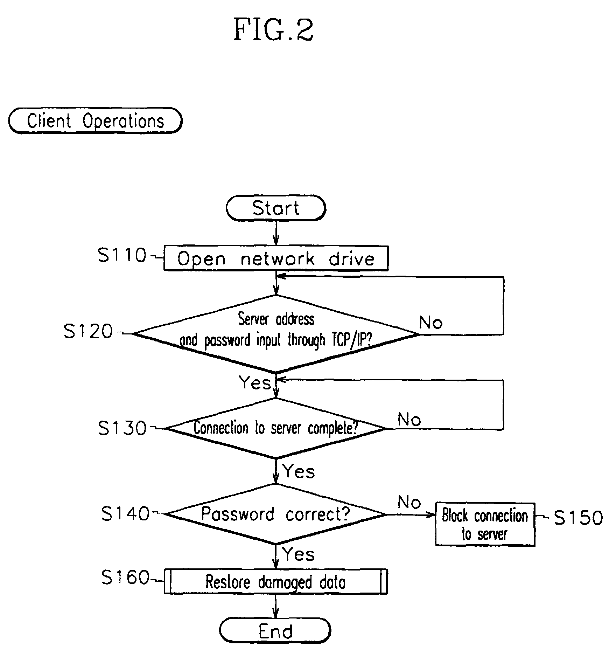

FIG. 2 is a flow chart for explaining an operation of a client for recovering a remote control data recovering method according to a preferred embodiment of the present invention.

Referring to FIG. 2, the client reads a network drive, such as from the Internet, so as to recover the data in step S310, and connects with a TCP/IP protocol and inputs a password so as to access the server address and corresponding server in step S320.

This process checks whether the client is connected to the server 500 in step S330, and when the client is connected, it checks whether the input password is acceptable in step S340.

If the password is not acceptable, the connection to the server is terminated in step S350.

When the password is acceptable, the drive is read or information for remotely recovering the data on the network from the sector read function is detected, and the damaged data are recovered based on the detected information in step S360.

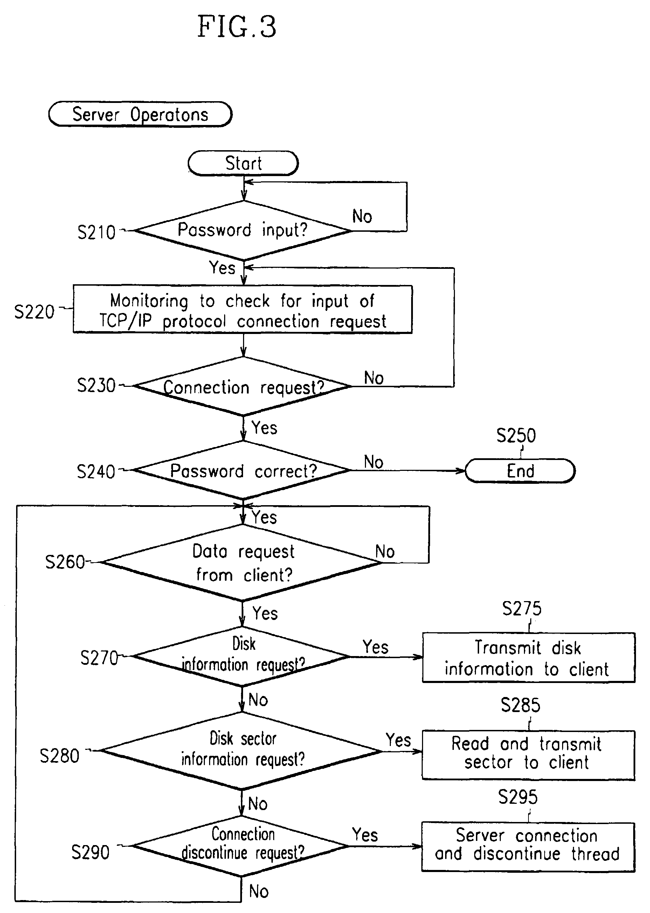

FIG. 3 is a flow chart explaining an operation of a server for recovering a remote control data recovering method according to a preferred embodiment of the present invention.

Referring to FIG. 3, the server checks whether the password is provided from the client in step S410, and when the password is provided, the server monitors whether a request for connecting with a TCP/IP protocol is provided from the client in step S420.

The server checks whether the request for the connection is provided in step S430, and when the request for a connection is not provided, it returns to the previous step S420. However, when a request for the connection is provided, server checks whether the password is acceptable in step S440. If the password is found not to acceptable, the process for recovering the data is terminated in step S450.

When server determines that the password is acceptable, it then checks as to whether or not a data request has been provided from the client in step S460.

When a data request is provided, the server checks whether the requested data is for disk information in step S470, and if it is found that the requested data is for disk information, the server transmits the disk information to the client in step S475.

When the requested data is not for disk information, server checks whether the requested data is for disk sector information in step S480, and if it is found that the requested data is for disk sector information, the server reads the sectors from the disk and transmits the sectors to the client in step S485.

If the server finds that the requested data is not for disk sector information, it then checks whether the requested data is connection termination request information in step S490. If the requested data is not connection termination request information, the server returns to the previous step S460. However, when the requested data is connection termination request information, the connection is terminated and the thread is finished in step S495.

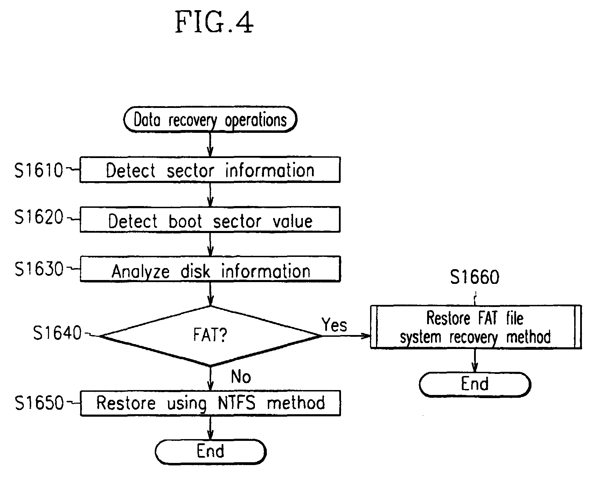

FIG. 4 is a flow chart providing a detailed explanation of the data recovering method by the client as shown in FIG. 2.

Referring to FIG. 4, the client reads the damaged first drive or remotely detects the sector information from the sector read function via a network, such as the Internet, in step S1610.

Values of the boot sector are detected in step S1620, and the disk information is analyzed based on the boot sector values in step S1630.

This process then checks whether the disk uses a FAT in step S1640, and when the disk is found to use a FAT, then it is determined to be a FAT file system and the data are recovered in step S1650. It checks whether the disk uses a NTFS in step S1660, and when the disk is found to use a NTFS, then it is determined to be a NTFS file system and the data are recovered in step S1670. It checks whether the disk uses a UNIX file system in step S1680, and when the disk is found to use a UFS, then it is determined to be a UFS file system and the data are recovered in step S1690. When it is not UFS file system, the data is recovered by the unknown file system method in step S1700.

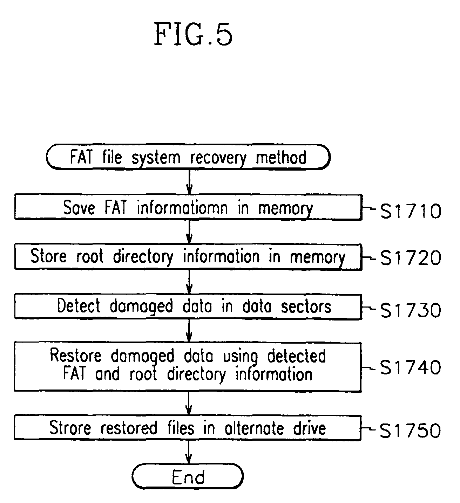

FIG. 5 is a flow chart for explaining a data recovering method of a FAT file system.

Referring to FIG. 5, the client detects FAT information and stores the FAT information in memory in step S1710, and detects the root directory information from the stored FAT information and stores the root directory information in memory in step S1720.

The client detects the damaged data from the data sectors in step S1730, and recovers the detected damaged data based on the detected FAT information and the root directory information in step S1740.

The client stores the recovered file not in the first drive, which has the damaged files, but in the second drive in step S1750. At this time, the storage capacity of the second drive must be greater than the capacity to be recovered from the damaged hard disk.

In the above, even when the hard disk has damaged files, the damaged files can be recovered by using a server program that transmits the damaged hard disk information via the Internet and using a client program that remotely recovers the server data via the network.

In the preferred embodiment of the present invention, damaged data can be remotely recovered by using client and server programs.

By connecting the data recovery program to the network, the inconvenience of removing the damaged hard disk from the computer body so as to recover the damaged data can be eliminated.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. In a method for recovering data through a server that includes a hard disk including damaged data, a network, and a client coupled to the server via the network, a network data recovery method comprising the steps of:
(a) coupling the server and the client via a transmission control protocol/Internet protocol (TCP/IP) protocol through the network;
(b) the server detecting the corresponding data information from a first hard disk drive (HDD) of the client and transmitting the data information to the client when a data request is provided to the server by the client via the network; and
(c) the client receiving the detected data information from the server and storing data information in a storage device, recovering the damaged data by using stored information, and storing recovered data in a second HDD different from the damaged drive.

2. The method of claim 1, wherein the step (b) comprises steps of:
(b-1) checking an acceptability of a password provided through the network, and when the password is determined to be not acceptable, terminating an access to the client;
(b-2) checking, when the password is determined to be acceptable, whether a data request is provided from the client, waiting until the data request is generated when there is no data request provided by the client, and checking, when there is a data request provided by the client, whether a disk information request is provided by the client;
(b-3) transmitting disk information to the client when there is a disk information request provided by the client, and checking whether a disk sector data request is provided by the client when there is no disk information request provided by the client; and
(b-4) reading sectors from the disk and transmitting the sectors to the client when there is a disk sector data request provided by the client, checking whether there is a connection termination request provided when there is no disk sector data request provided by the client, terminating the connection when there is a connection termination request provided, and returning to step (b-2) when there is no connection termination request provided.

3. The method of claim 1, wherein step (c) comprises steps of:
(c-1) reading partition information of the damaged first HDD from the server, and storing partition information in the storage device;
(c-2) detecting boot sector values from the partition information;
(c-3) analyzing disk information from the boot sector information, and checking whether the disk information is a file allocation table (FAT);
(c-4) determining that the damaged hard disk is a FAT file system, and recovering the FAT file system when the disk information is a FAT in step (c-3);
(c-5) analyzing disk information from the boot sector information, and checking whether the disk information is an NT file system (NTFS);
(c-6) determining that the damaged hard disk is a NTFS file system when the disk information is an NTFS in step (c-5), and recovering the NTFS file system; and
(c-7) analyzing disk information from the boot sector information, and checking whether the disk information is a UNIX file system (UFS);
(c-8) determining that the damaged hard disk is a UFS file system when the disk information is a UFS in step (c-7), and recovering the UNIX file system; and
(c-9) determining that the damaged hard disk is an unknown file system when the disk information is not a UNIX file system in step (c-7), and recovering the unknown file system.

4. The method of claim 3, wherein step (c-4) comprises steps of:
(c-4a) storing FAT information(Disk FAT and File FAT) of the damaged hard disk in the storage device;
(c-4b) detecting the root directory information from FAT information and storing root directory information in the storage device;
(c-4c) recovering the damaged data, based on the root directory information; and
(c-4d) storing recovered data in the second HDD.

5. A network data recovery system comprising:
a client connecting to a network, inputting a transmission control protocol/Internet protocol (TCP/IP) address and a password, reading information for recovering damaged data through the network or by using a sector reading function, recovering the data, and storing recovered data in an undamaged storage device; and
a server checking the password when there is a connection request provided by the client on the network, allowing the connection when the password is found to be acceptable, analyzing the request data, and transmitting a response to the client when there is a data request provided by the client through the allowed path.

6. The system of claim 5, wherein when a password log-in is provided by the client, the server monitors whether a TCP/IP protocol connection request is provided by the client, and when there is a connection request provided, the server checks an acceptability of the password, and when the password is found to be acceptable, the server checks whether there is a data request provided by the client, and when the requested data is disk information, the server reads disk information from the damaged hard disk and transmits the disk information to the client, and when the requested data is sector information, the server reads the sector information from the damaged hard disk and transmits the sector information to the client, and when the requested data is connection termination information, the server terminates a connection to the network.

7. The system of claim 6, wherein the sector information comprises information on a partition table, boot sector, FAT, root directory, and data.
